Europäisches Patentamt

European Patent Office

Office européen des brevets

(19)

(11) Publication number: **0 041 868**
**B1**

(12) **EUROPEAN PATENT SPECIFICATION**

(45) Date of publication of patent specification: **27.02.85**

(51) Int. Cl.⁴: **H 04 N 5/783**

(21) Application number: **81302558.2**

(22) Date of filing: **09.06.81**

(54) **System for processing video signals.**

(30) Priority: **09.06.80 JP 77529/80**

(43) Date of publication of application:
**16.12.81 Bulletin 81/50**

(45) Publication of the grant of the patent:
**27.02.85 Bulletin 85/09**

(84) Designated Contracting States:
**DE FR GB**

(56) References cited:
**DE-A-2 915 881**
**DE-A-2 939 276**

(73) Proprietor: **Matsushita Electric Industrial Co., Ltd.**
**1006, Oaza Kadoma**
**Kadoma-shi Osaka-fu, 571 (JP)**

(72) Inventor: **Honjo, Masahiro**
**30-23, Miyukihigashi-machi**
**Neyagawa-shi Osaka-fu (JP)**
Inventor: **Tomita, Masao**
**271-2, Oaza-Uchiage**
**Neyagawa-shi Osaka-fu (JP)**

(74) Representative: **Crawford, Andrew Birkby et al**
**A.A. THORNTON & CO. Northumberland House**
**303-306 High Holborn**
**London WC1V 7LE (GB)**

Courier Press, Leamington Spa, England.

## Description

This invention relates to a system for processing video signals for eliminating horizontal picture skew that appears in monitoring video signals (by a television receiver) which are reproduced from a video tape recorder in an abnormal mode (i.e. in which the speed of the tape in the reproducing mode is different from the speed of the tape in the recording mode) so as to obtain stable picture reproduction.

In a rotary head magnetic recording and reproducing system (hereinafter referred to as VTR), the slopes of the traces of the scanning rotary heads upon reproduction are different from the slopes of the tracks scanningly recorded by the rotary heads, when the reproduction is a slow motion reproduction, a still picture reproduction or quick motion reproduction, i.e. reproduction which is performed at a tape transportation speed different from that of recording. For example, in a VTR wherein the tape scanning direction of the rotary head is the same as that of tape transportation, the slopes of the scanning traces of the rotary heads for slow motion reproduction and still picture reproduction are less steep than the recorded tracks. On the other hand, the slopes of the scanning traces for fast reproduction are steeper than the recorded tracks. Therefore, in reproduction in these cases, the heads scan plural recorded tracks in one field. So, not only are noise bands produced thereby, but also the number of horizontal synchronous (H number) reproduced in each field becomes different from the H number in recording. For example, in the case of still picture reproduction by a VTR for azimuth recording which performs a 1.5H H number adjustment, 264H are reproduced in a field. (Usually this should be 262.5H.)

In a VTR for azimuth recording, output signals cannot be obtained upon reproduction unless the heads used in recording are identical to those used upon reproduction. So, since the H number upon reproduction is different from that upon recording as mentioned above, the time periods between adjacent vertical synchronous signals in the reproduced video signals become different from those in the recorded video signals. In the above-mentioned example, a time difference of 3H occurs between the adjacent fields. That is, the vertical synchronous signals cycle by 262.5H, 265.5H, 262.5H, 265.5H, . . ., namely by alternating long and short fields. In slow motion reproduction also, similar inconsistency of vertical synchronous signal cycle period occurs. But in this case, such long and short fields do not cycle by adjacent fields as was the case in still picture reproduction. For example, in a 1/5 slow motion reproduction, 5 fields form one cycle.

The foregoing description is directed to the case when each rotary head scans plural recorded tracks in each scanning period upon reproduction. However, the above described inconstancy of vertical synchronous signal cycle period occurs quite similarly when the VTR employs an electric-to-mechanical conversion element for moving each rotary head in a direction perpendicular to the scanning direction so as to perform complete on-tracking, because even in such case the H number reproduced in each head scanning period is different from that recorded therein.

For example, in the case of still reproduction mode by said VTR which employs an electric-to-mechanical conversion element, for azimuth recording which performs H number adjustment by 0.75H, it reproduces 263.25H in one field.

For another example, in the case of slow reproduction mode by said VTR, for azimuth recording which performs H number adjustment by 0.75H, it reproduces either 263.25H or 261.75H each field.

If a composite video signal having such inconstant vertical synchronous signal cycle periods is applied to a television receiver, when the azimuth recording performs H number adjustment by 0.75H, the reproduced picture frames appear skewed on the television screen, which is called horizontal picture skew (hereinafter referred to as H skew), causing extremely distorted pictures.

Heretofore, as an example of correction for said H skew, there has been proposed introducing a correction that changes the video signal into one which is delayed 0.5H with respect to an inconstant point of horizontal synchronous signals; however, this correction is effective only in frame reproduction mode and cannot correct in field reproduction mode.

GB—A—2 032 728 discloses a system for delaying video signals on a field-by-field basis so as to reduce vertical picture fluctuations during special playback modes. A variable delay is introduced into the video signal path in accordance with the selected special playback mode. Thus a specific delay time must be provided for each special playback mode, and also it is not possible for the system to cope with a continuously varying speed mode.

GB—A—2 019 690 discloses a similar system which provides delay times on a field-by-field basis so as to avoid disturbing the horizontal synchronising signals which would cause horizontal skew. The delay time is changed linearly within a field, and also is provided once every n frames during a 1/n speed playback mode. Again, it is therefore necessary for a specific special mode to be set whereupon appropriate delay times are provided in response to the setting.

The present invention provides a horizontal picture skew elimination system comprising:

a video tape recorder for reproducing video signals recorded on a video track of a video tape and control pulses recorded on a control track of the video tape and for generating a head switch signal;

a delay circuit for delaying said video signals and applying the delayed video signals to a television monitor;

a control pulse detector having said control pulses and said head switch signal supplied thereto for detecting the number of said control pulses appearing during one field; and

a control circuit responsive to said control pulse detector and said head switch signal for producing a delay time selection signal which is supplied to said delay circuit for selecting a delay time for each field; characterised in that:

said control pulse detector produces a count signal which is indicative of whether the number of said control pulses appearing during one field is an even or an odd number; and

said control circuit has two correction modes: a first correction mode for selecting one of several predetermined delay times for each field which is either a first time shorter or a second time longer than a previously selected one of said several predetermined delay times; and a second correction mode for selecting one of said several predetermined delay times for each field which is either said first time longer or said second time shorter than said previously selected one of said several predetermined delay times, the sum of said first and second time being an integer times a horizontal synchronizing signal period, said first and second correction modes being selected according to whether said count signal is an even number (including zero) or an odd number respectively,

wherein said control circuit operation is repeated on a field by field basis so as to eliminate horizontal picture skew appearing on said television monitor.

A system in accordance with the present invention can provide appropriate delay times solely in response to the detected speed of movement of the video tracks and information as to the field length provided by the head switch signal, taking into account the delay time in the preceding field. Thus compensation for special speed modes is automatically provided, not in response to actual setting of a special mode switch. In the preferred embodiment, one of two correction modes is set in response to the above parameters which can compensate for any special playback mode, even one involving a continuous speed variation.

Features and advantages of the present invention will become apparent from the following description of an embodiment thereof given by way of example with reference to the accompanying drawings in which:

Fig. 1 is a representation of a recording pattern on magnetic tape produced by the magnetic heads of a video tape recorder;

Fig. 2 is a table showing the correction of a still motion mode;

Fig. 3 is a table showing the correction of a double speed fast motion mode;

Fig. 4 is a table showing the correction of a 1/2 slow motion mode;

Fig. 5 shows the relationship between the correction and CTL number in a field and the reproduction speed of the tape;

Fig. 6 is a table showing the correction of a triple speed fast motion mode;

Fig. 7 shows a schematic block diagram of this invention;

Fig. 8 shows a more detailed block diagram of this invention;

Fig. 9 shows waveform diagrams to explain the slow motion mode of the circuit shown in Fig. 8; and

Fig. 10 shows an example of the maximal difference of H number between adjacent fields, with 4, 5, 9 kinds of times of delay.

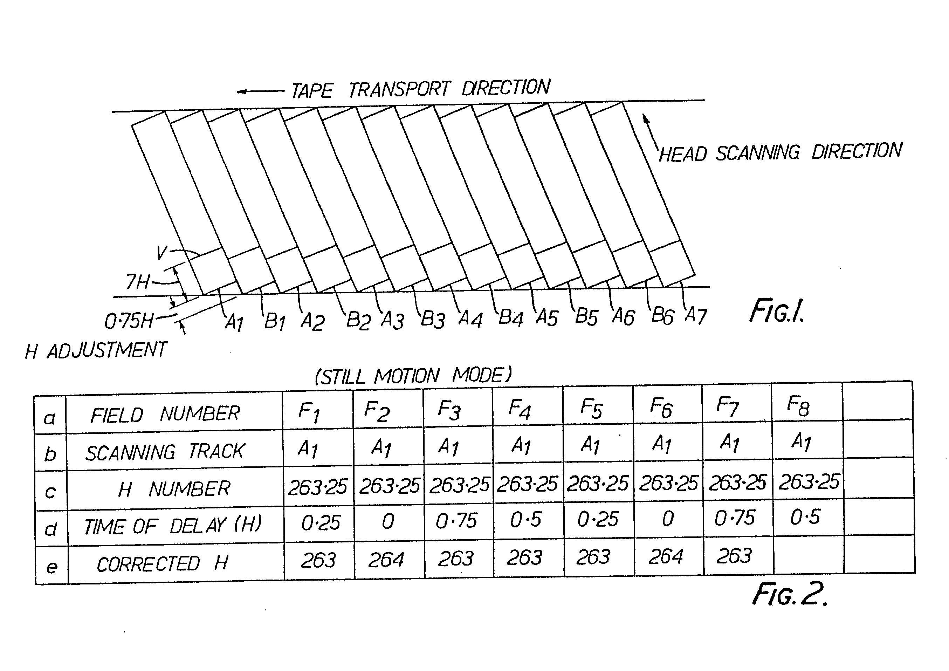

Referring to Fig. 1, there is shown a recording pattern on the tape which is recorded by the magnetic heads of a VTR including: recorded tracks $A_1$, $B_1$, $A_2$, $B_2$, $A_3$, . . ., the scanning direction of the magnetic heads, the direction of the tape transportation, the vertical synchronous signal (V), and the form of the H number's adjustment (0.75H in this case), wherein recorded tracks $A_1$, $A_2$, $A_3$, . . . are recorded by the magnetic head A with azimuth A and recorded track $B_1$, $B_2$, $B_3$, . . . are recorded by the magnetic head B with azimuth B, and azimuth A is usually different from azimuth B.

From here on, we give a detailed description of a VTR performing H number adjustment of 0.75H. As an example, we detail the case of a VTR which employs an electric-to-mechanical conversion element for moving each rotary head perpendicular to the scanning direction so as to perform complete on-tracking (and each head has the same azimuth).

Fig. 2 shows correction of the still motion mode, Fig. 2(a) shows the field number, (b) is the track scanned by the magnetic heads, (c) is the H number in a field, (d) is the time of delay for correction and (e) is the corrected H number in a field. The heads scan only for example A track in the field reproductive mode, and in the still motion mode, they scan the same track like $A_1$, $A_1$, $A_1$, $A_1$, . . . as shown in Fig. 2(b). Although H number in a field is 262.5H in normal mode, H number in said case is 263.25H in a field. This means discontinuity of the horizontal synchronous signal of 0.25H, wherefore H skew on the television screen appears. So it is possible to eliminate H skew by eliminating said fraction 0.25H.

Referring to Fig. 2, wherein by delaying the video signal of the field number $F_1$ for 0.25H, and not delaying the video signal of the next field $F_2$, H number of the field $F_1$ decreases 0.25H and is corrected to an integer number value of 263H. Then by delaying the video signal of the next field $F_3$ for 0.75H, H number of the field $F_2$ increases 0.75H and is corrected to an integer number value of 264H. After all, the 0.25H H number fraction is eliminated by delaying the video signal of the next field for the time delay which is 0.75H longer or 0.25H shorter than the time delay of the preceding field. This correction will be referred to as the first correction. For example, as shown in Fig. 2, by delaying the video signal for 0.25H, 0H, 0.75H, 0.5H, 0.25H, 0H, . . . in each field, H number in a field is corrected to be 263H, 264H, 263H, 263H, . . . .

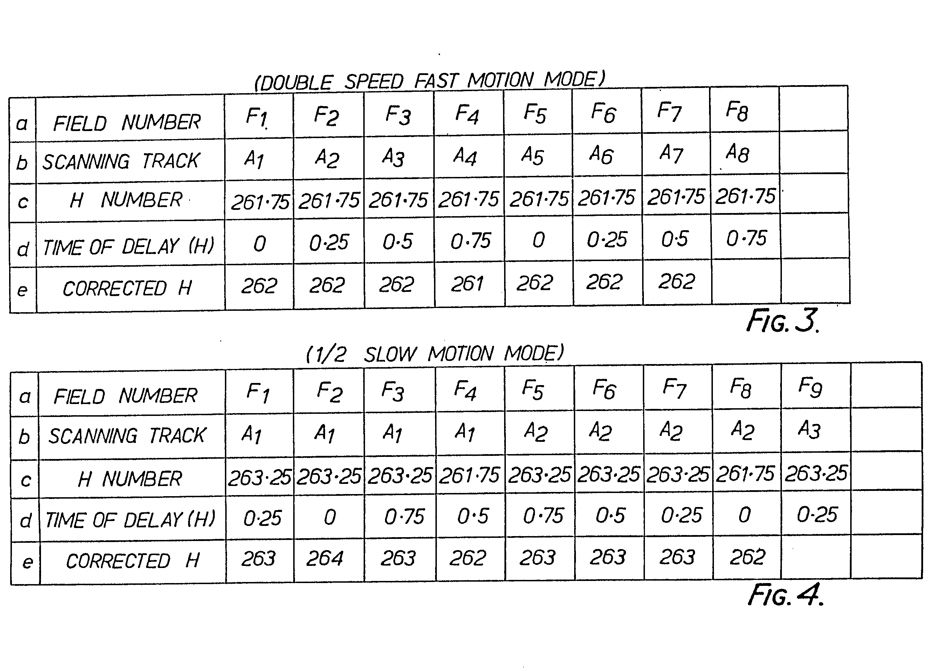

Similarly, Fig. 3 shows the correction in the double speed fast motion mode. When two heads scan the track like $A_1$, $A_2$, $A_3$, $A_4$, ... and then H number in every field is 261.75H as Fig. 3(C), this invention delays the video signal of the field $F_1$ for 0H, and delays the video signal of the field $F_2$ for 0.25H making H number of the field $F_1$ increase by 0.25H, so that it is corrected to an integer number value of 262H. Then, by delaying the video signal of the field $F_3$ for 0.5H, and delaying the video signal of the field $F_4$ for 0.75H, and delaying the video signal of the field $F_5$ for 0H, the H number in a field is corrected to an integer number value wherein the H number of the fields $F_2$, $F_3$ is 262H, the H number of the field $F_3$ is 261H. In this way, H number in a field is corrected to the values 262H, 262H, 262H, 261H, ... as Fig. 3(e). As a result, the 0.75H H number fraction is eliminated by delaying the video signal of the next field for a time delay which is 0.25H longer or 0.75H shorter than the time delay of the preceding field. This is the opposite correction to the first correction, and will be referred to as the second correction.

In the above mentioned example, two corrections were detailed at two fixed speeds of the tape, still motion mode and double speed fast motion mode. These types of corrections can be developed for any speed, that is, by adjusting correction to match tape speed, we can correct the video signal in any speed of the tape.

Fig. 4 shows the correction in 1/2 slow motion mode in which H number in a field is either 263.25H or 261.75H. The heads scan 4 times on each track like $A_1$, $A_1$, $A_1$, $A_1$, $A_2$, $A_2$, ... as Fig. 4(b) and then H number in a field is shown in Fig. 4(c). H number is 263.25H when the head scans the same track, and when the head shifts from one track to the other as from $A_1$ to $A_2$ or from $A_2$ to $A_3$, H number of the preceding field becomes 261.75H, as shown in Fig. 4. Here, when heads scan the same track $A_1$ as from $F_1$ to $F_4$ or the same track $A_2$ as from $F_5$ to $F_8$, we use the first correction which delays the video signal of the next field for 0.25H shorter or 0.75H longer than the time of delay of the preceding field. And when the heads shift from one track to the other as from $F_4$ to $F_5$, we use the second correction which delays the video signal of the next field for 0.75H shorter or 0.25H longer than the time of delay of the preceding field. Whereby H number in a field is corrected to an integer number value like 263H, 264H, ... as shown in Fig. 4(e).

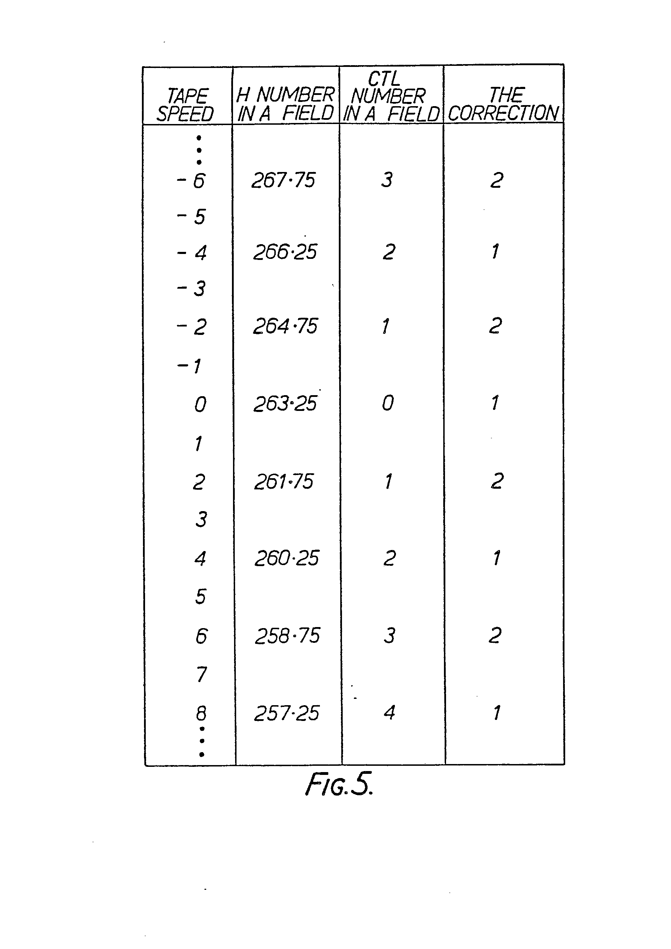

Here, we can choose either the first correction or the second correction by counting the control pulse (hereinafter referred to as CTL). Fig. 5 shows the tape speed, H number in a field, CTL number in a field and the correction. For example, in −4 reverse motion mode (− means reverse), H number in a field is 266.25H, CTL number in a field is 2 and this correction is the second correction. For another example, in triple fast motion mode, H number in a field is 261.75H or 260.25H by turns, and CTL number in a field is 1 or 2 by turns, wherewith the correction is the first correction or the second correction by turns.

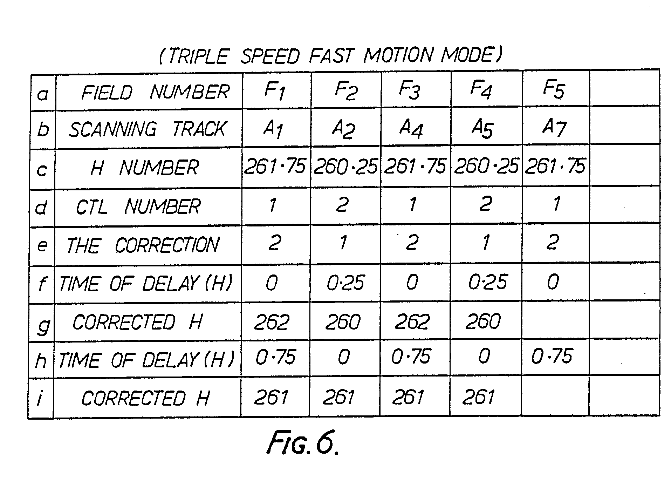

Fig. 6 shows (in triple speed fast reproduction mode), the reproduced track (b), H number in a field (c), CTL number in a field (d), the correction (e), an example of the time of delay (f), the corrected H number in a field (g), the another example of the time of delay (h) and the corrected H number in a field (i). Here, heads scan the recorded track like $A_1$, $A_2$, $A_4$, $A_5$, $A_7$, wherein H number in a field is 261.75H or 260.25H by turns. CTL number in the preceding field is 1 when heads shift from one track to the adjacent track like from $A_1$ to $A_2$ or from $A_4$ to $A_5$, and CTL numbers in the preceding field are 2 when heads shift 2 tracks like from $A_2$ to $A_4$ or from $A_5$ to $A_7$. Now, the 0.75H fraction and the 0.25H fraction of H number correspond to CTL numbers 1 and 2, respectively. Whereupon, when the CTL number in a field is 1, we use the second correction, and when the CTL number in a field is 2, we use the first correction. Fig. 6(f), (g) show the correction when the time of delay in the field $F_1$ is 0H, and Fig. 6(h), (i) show the correction when the time of delay in the field $F_1$ is 0.75H.

Here, as said in Fig. 5, in any tape speed, the field which has the fraction 0.25H of H number corresponds to the field whose CTL number is an even or zero number, and the field which has the fraction 0.75H of H number corresponds to the field which has CTL number that is an odd number.

Then, generally speaking, we detect the CTL number in a field, and when the CTL number is odd, we use the second correction, and when the CTL number is even or zero, we use the first correction, wherewith the correction in any tape speed is performed.

In the above mentioned example, H number in a field is corrected to an integral number. But according to H number in a field is corrected to H number which has 0.5H fraction, it is possible to do interlaced scanning on the monitoring television. This correction is possible by changing the first correction with second correction.

In summary this invention at first detects the CTL number in a field (whether it is an even number or an odd number or zero) and based on that chooses either the first correction or the second correction, and delays the video signal in each field for a predetermined time. In this way, this system is able to correct for any tape speed.

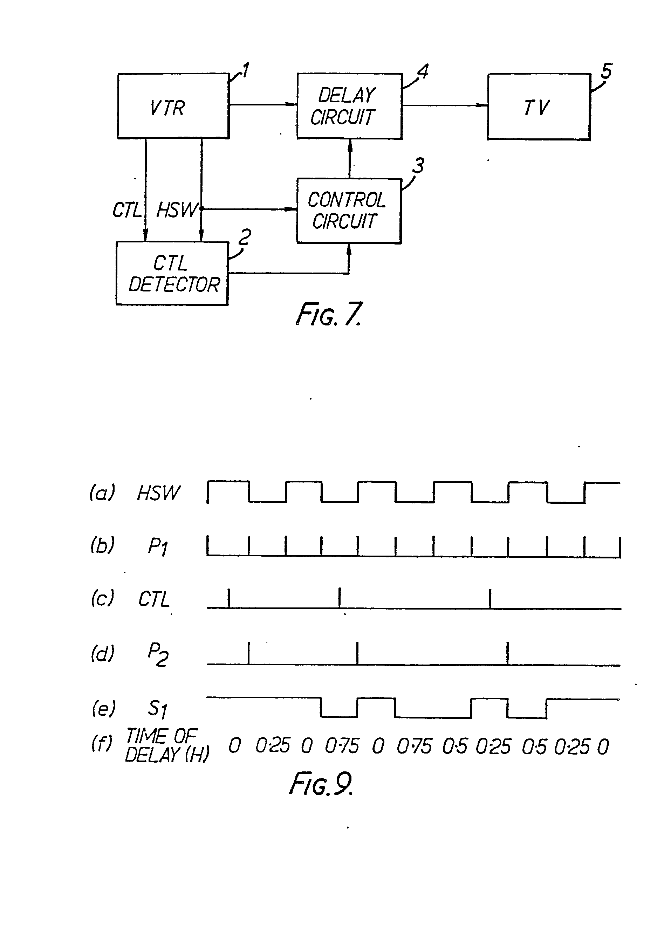

Fig. 7 shows a schematic block diagram of this invention, wherein the reproduced video signal by the VTR 1 is supplied to the delay circuit 4 and an output of the delay circuit 4 is applied to the television 5. The signals picked up from the VTR 1 are not only video signals but also a head switch signal (HSW) and a control pulse (CTL). Then, both signals HSW and CTL are applied to the CTL detector 2, and both an output of the CTL detector and HSW are applied to the control circuit 3, and the control circuit 3 controls the delay circuit 4.

The delay circuit 4 is the circuit which delays the reproduced video signal for a predetermined time on each field, then the time of delay is an integral number times 0.25H, so that the continuity of H is kept and the reproduced picture appears stable on the television screen 5. The control circuit 3 controls the delay circuit 4 by choosing the correction (either the first correction or the second correction) and is connected to the VTR 1 and CTL detector 2. The CTL detector 3, wherein input signals are HSW and CTL from VTR 1, counts CTL in a field and detects the CTL number (either an even number including zero or an odd number) and chooses either the first correction or the second correction, and supplies the appropriate signal to the control circuit 3.

Referring to Fig. 8, there is shown a block diagram of this invention, wherein the input terminal 22 is connected to the VTR 1 and the output terminal 23 is connected to the television 5.

The delay circuit 4 which is surrounded by a dotted line comprises, a 0.25H delay block 16 which delays the video signal for 0.25H, a 0.5H delay block 17 which delays the video signal for 0.5H, an analog switch 18 which goes through the input signal to the input of the 0.5H delay block 17, an analog switch 19 between the output of 0.25H delay block 16 and the input of 0.5H delay block 17, an analog switch 20 between the input of 0.5H delay block 17 and the output terminal 23, an analog switch 21 between the output of 0.5H delay block 17 and the output terminal 23. Said analog switches 18, 19, 20 and 21 are supplied with the control signals — HSW, the output of the inverter 14, a signal $S_1$ which is supplied from the control circuit 3, the output of the inverter 15, respectively. The control circuit 3 which is surrounded by a dotted line comprises, T-flip-flop (T-FF, hereafter) 11, 12 and AND-NOR gate 13. The output of AND-NOR gate 13 is applied to the delay circuit 4 and inverter 15. The CTL detector 2 which is surrounded by a dotted line, comprises T-FF 6, D-flip-flop (D-FF, hereafter) 7, EX-OR gate 8 and AND gate 9. The input signals of the CTL detector 2 are CTL and signal $P_1$ which shows the edge of HSW, and the output signal $P_2$ is applied to T-FF 11 from AND gate 9. The edge of HSW detector 24 detects the edge of HSW.

Now, Fig. 9 shows a time chart in slow motion mode. Fig. 9(a) shows HSW which is applied to the analog switch 18, inverter 14, 10. Fig. 9(b) shows signal $P_1$ which shows the edge of HSW, and $P_1$ is applied to the D-FF 7 and AND gate 9 from the edge of HSW detector. Fig. 9(c) shows CTL which is applied to T-FF 6. Fig. 9(d) shows signal $P_2$ which is the output of the AND gate 9. $P_2$ is applied to the T-FF 11. Fig. 9(e) shows $S_1$, which is the output of AND-NOR gate 13. $S_1$ is applied to the analog switch 20 and inverter 15, so when $S_1$ is high, the input signal of the 0.5H delay block 17 goes through the output terminal 23, and when $S_1$ is low, the input signal of the 0.5H delay block 17 is delayed for 0.5H and goes to the output terminal 23. Similarly, when HSW is high, the input signal of the 0.25H delay block 16 goes through the 0.5H delay block 17, and when HSW is low, the input signal of the 0.25H delay block 16 is delayed for 0.25H and goes to the 0.5H delay block 17.

Fig. 9(f) shows the time of delay for correction.

In the following field from $P_2$, this system performs the second correction, which delays the video signal of the next field for 0.25H longer or 0.75H shorter than the time of delay of the preceding field, and in other field, this system performs the first correction, which delays the video signal of the next field for 0.75H or 0.25H shorter than the time of delay of the preceding field. In this way, this system can correct the video signal which has H skew in the abnormal reproducing mode.

Here, it is possible to correct the video signal by using 4 kinds of time delay, 0H, 0.25H, 0.5H, 0.75H, but, in this case, the corrected H number in a field does not become the same number in each field. If there is a lot of difference of H number between adjacent fields, the reproduced picture frames sometimes appear shifted vertically on the television screen, which is so called vertical picture fluctuation.

Here, the method to decrease said difference of H number between adjacent fields has many kinds of time delay.

That is to say, when we use 4 kinds of time delay, 0H, 0.25H, 0.5H and 0.75H, the maximal difference of H number between adjacent fields is 3H. Whereas, when we use 5 kinds of time delay, 0H, 0.25H, 0.5H, 0.75H and 1H, the maximal difference of H number between adjacent fields becomes 2H, and when we use 9 kinds of time delay, 0H, 0.25H, 0.5H, 0.75H, 1.0H, 1.25H, 1.5H, 1.75H and 2.0H, the maximal difference of the H number between adjacent fields becomes almost 1H.

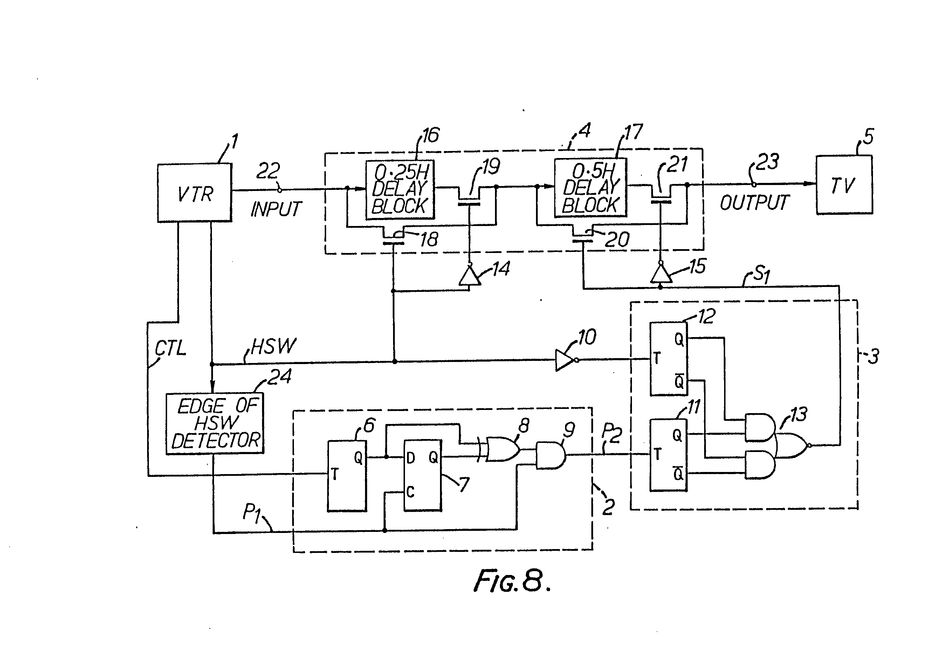

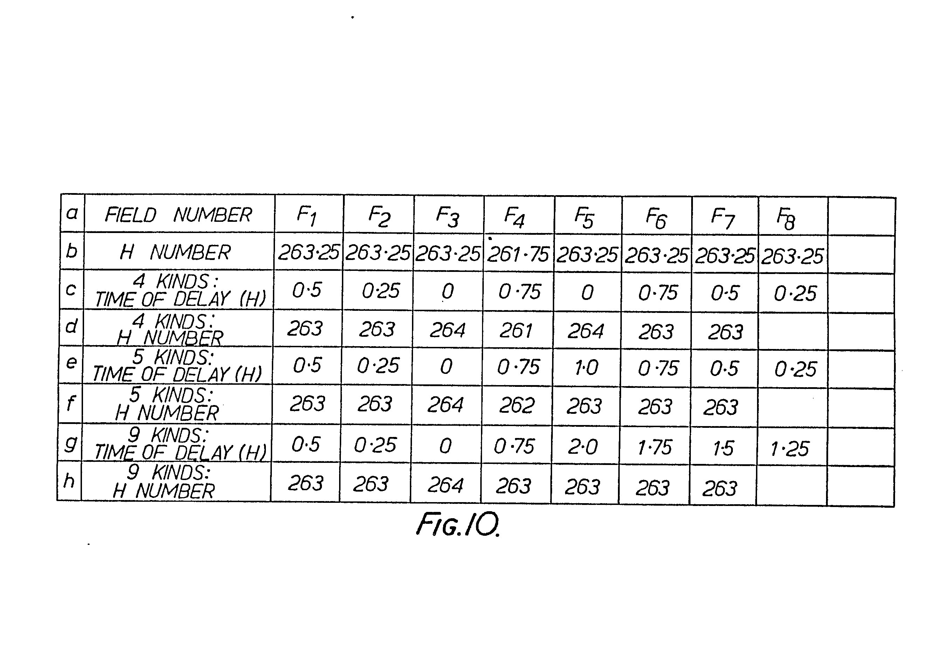

Fig. 10 shows an example of the maximal difference of H number between adjacent fields.

Fig. 10(a) shows a field number, (b) shows H number in a field, it shows the discontinuity of the H as 0.25H or 0.75H. Fig. 10(c) shows the time delay when we use 4 kinds of time delay, (d) shows the corrected H number by (c), and the maximal difference of H number between adjacent fields is 3H (264H − 261H). Fig. 10(e) shows the time delay when we use 5 kinds of time delay, (f) shows the corrected H number by (e) and the maximal difference of H number between adjacent fields is 2H (264H − 262H). Fig. 10(g) shows the time delay when we use 9 kinds of time delay, (h) shows the corrected H number by (g) and the maximal difference of H number between adjacent fields is 1H (264H − 263H), in this case, vertical picture fluctuation almost does not appear at all on the television.

In this way, it is possible to keep H number in a field almost constant by using many kinds of time delay. Therefore, this invention prevents H skew on a television screen in the abnormal reproducing modes.

## Claims

1. A horizontal picture skew elimination system comprising:
   a video tape recorder (1) for reproducing video signals recorded on a video track of a video tape and control pulses (CTL) recorded on a control track of the video tape and for generating a head switch signal (HSW);

a delay circuit (4) for delaying said video signals and applying the delayed video signals to a television monitor (5);

a control pulse detector (2) having said control pulses (CTL) and said head switch signal (HSW) supplied thereto for detecting the number of said control pulses appearing during one field; and

a control circuit (3) responsive to said control pulse detector (2) and said head switch signal (HSW) for producing a delay time selection signal which is supplied to said delay circuit (4) for selecting a delay time for each field; characterised in that:

said control pulse detector (2) produces a count signal (P₂) which is indicative of whether the number of said control pulses (CTL) appearing during one field is an even or an odd number; and

said control circuit (3) has two correction modes: a first correction mode for selecting one of several predetermined delay times for each field which is either a first time shorter or a second time longer than a previously selected one of said several predetermined delay times; and a second correction mode for selecting one of said several predetermined delay times for each field which is either said first time longer or said second time shorter than said previously selected one of said several predetermined delay times, the sum of said first and second time being an integer times a horizontal synchronizing signal period, said first and second correction modes being selected according to whether said count signal (P₂) is an even number (including zero) or an odd number respectively,

wherein said control circuit operation is repeated on a field by field basis so as to eliminate horizontal picture skew appearing on said television monitor.

2. A system according to claim 1, characterised in that said several different predetermined delay times are respective integer numbers multiplied by 0.25H, wherein H corresponds to a horizontal synchronizing signal period.

3. A system according to claim 1, characterised in that said first time is 0.25H and said second time is 0.75H, wherein H corresponds to a horizontal synchronizing signal period.

**Patentansprüche**

1. System zum Beseitigen von Horizontalbildschrägverzerrungen, umfassend:

einen Videobandrekorder (1) zum Wiedergeben von Videosignalen, die auf einer Videospur eines Videobandes aufgezeichnet sind, und Steuerimpulse (CTL), die auf einer Steuerspur des Videobandes aufgezeichnet sind, und zum Erzeugen eines Kopfschaltsignals (HSW);

einen Verzögerungskreis (4) zum Verzögern der Videosignale und zum Zuführen der verzögerten Videosignale zu einem Fernsehmonitor (5);

einen Steuerimpulsdetektor (2), dem die Steuerimpulse (CTL) und das Kopfschaltsignal (HSW) zugeführt sind zum Ermitteln der Anzahl der genannten Steuerimpulse, die während eines Teilbildes erscheinen; und

einen Steuerkreis (3), der auf den Steuerimpulsdetektor (2) und das Kopfschaltsignal (HSW) anspricht zum Erzeugen eines Verzögerungszeit-Auswahlsignals, das dem genannten Verzögerungskreis (4) zugeführt ist, um eine Verzögerungszeit für jedes Teilbild auszuwählen; dadurch gekennzeichnet, daß:

der Steuerimpulsdetektor (2) ein Zählsignal (P₂) erzeugt, das angibt, ob die Anzahl der Steuerimpulse (CTL), die während eines Teilbildes erscheinen, gerade oder ungerade ist; und

daß der Steuerkreis (3) zwei Korrekturarten hat: eine erste Korrekturart zum Auswählen einer aus mehreren vorbestimmten Verzögerungszeiten für jedes Teilbild, die entweder eine erste Zeit kürzer oder eine zweite Zeit länger als eine zuvor gewählte der genannten mehreren vorbestimmten Verzögerungszeiten ist; und eine zweite Korrekturart zum Auswählen einer aus genannten mehreren vorbestimmten Verzögerungszeiten für jedes Teilbild, die entweder die genannte erste längere Zeit oder die genannte zweite kürzere Zeit als die genannte zuvor gewählte aus den genannten mehreren vorbestimmten Verzögerungszeiten ist, wobei die Summe der genannten ersten und zweiten Zeiten ein ganzzahliges Vielfaches einer Horizontalsynchronsignalperiode ist und die ersten und zweiten Korrekturarten je nachdem ausgewählt sind, ob das Zählsignal (P₂) eine gerade Zahl (einschließlich Null) oder eine ungerade Zahl ist,

wobei die Steuerkreisbetätigung auf einer Basis Teilbild für Teilbiled wiederholt wird, um Horizontalbildschrägverzerrungen, die auf dem Fernsehmonitor erscheinen, zu eliminieren.

2. System nach Anspruch 1, dadurch gekennzeichnet, daß die verschiedenen unterschiedlichen, vorbestimmten Verzögerungszeiten ganzzahlige Vielfache von 0,25H sind, wobei H einer Horizontalsynchronsignalperiode entspricht.

3. System nach Anspruch 1, dadurch gekennzeichnet, daß die erste Zeit 0,25H und die zweite Zeit 0,75H ist, wobei H einer Horizontalsynchronsignalperiode entspricht.

**Revendications**

1. Système d'élimination des distorsions d'image horizontales comprenant:

un magnétoscope (1) permettant de reproduire des signaux vidéo enregistrés sur une piste vidéo d'une bande vidéo et des impulsions de commande (CTL) enregistrées sur une piste de commande de la bande vidéo et de produire un signal de commutation de tête (HSW);

un circuit retardateur (4) permettant de retarder lesdits signaux vidéo et d'appliquer les signaux vidéo retardés à un moniteur de télévision (5);

un détecteur (2) d'impulsions de commande recevant lesdites impulsions de commande (CTL) et ledit signal de commutation de tête (HSW) et permettant de détecter le nombre desdites impulsions de commande apparaissant pendant une trame; et

un circuit de commande (3) qui répond audit détecteur (2) d'impulsions de commande et audit signal de commutation de tête (HSW) en produisant un signal de sélection de retard qui est délivré audit circuit retardateur (4) afin de permettre la sélection d'un retard pour chaque trame; caractérisé en ce que:

ledit détecteur (2) d'impulsions de commande produit un signal de comptage ($P_2$) qui indique si le nombre desdites impulsions de commande (CTL) apparaissant pendant une seule trame est un nombre pair ou un nombre impair; et

ledit circuit de commande (3) possède deux modes de correction: un premier mode de correction permettant de sélectionner l'un parmi plusieurs retards prédéterminés pour chaque trame, lequel est d'une première durée plus court ou d'une deuxième durée plus long qu'un retard antérieurement sélectionné parmi lesdits retards prédéterminés; en un deuxième mode de correction permettant de sélectionner l'un desdits retards prédéterminés pour chaque trame, lequel est plus long de ladite première durée ou plus court de ladite deuxième durée que le retard antérieurement sélectionné parmi lesdits retards prédéterminés, la somme desdites première et deuxième durées étant égale à un nombre entier de fois une période des signaux de synchronisation horizontale, lesdits premier et deuxième modes de correction étant sélectionnés en fonction du fait que ledit signal de commande ($P_2$) est un nombre pair (y compris zéro) ou un nombre impair;

où le fonctionnement dudit circuit de commande est répété sur une base trame-par-trame de façon à éliminer les distorsions d'image horizontales apparaissant sur ledit moniteur de télévision.

2. Système selon la revendication 1, caractérisé en ce que lesdits retards prédéterminés différents sont des nombres entiers multipliés par 0,25H, où H correspond à une période des signaux de synchronisation horizontale.

3. Système selon la revendication 1, caractérisé en ce que ladite première durée est 0,25H et ladite deuxième durée est 0,75H, où H correspond à la période des signaux de synchronisation horizontale.

0 041 868

←— TAPE TRANSPORT DIRECTION

HEAD SCANNING DIRECTION

$V$

$7H$

$0.75H$

$A_1$  $B_1$  $A_2$  $B_2$  $A_3$  $B_3$  $A_4$  $B_4$  $A_5$  $B_5$  $A_6$  $B_6$  $A_7$

*FIG.I.*

H ADJUSTMENT

(STILL MOTION MODE)

| | | $F_1$ | $F_2$ | $F_3$ | $F_4$ | $F_5$ | $F_6$ | $F_7$ | $F_8$ | |
|---|---|---|---|---|---|---|---|---|---|---|
| a | FIELD NUMBER | $F_1$ | $F_2$ | $F_3$ | $F_4$ | $F_5$ | $F_6$ | $F_7$ | $F_8$ | |
| b | SCANNING TRACK | $A_1$ | $A_1$ | $A_1$ | $A_1$ | $A_1$ | $A_1$ | $A_1$ | $A_1$ | |
| c | H NUMBER | 263·25 | 263·25 | 263·25 | 263·25 | 263·25 | 263·25 | 263·25 | 263·25 | |
| d | TIME OF DELAY (H) | 0·25 | 0 | 0·75 | 0·5 | 0·25 | 0 | 0·75 | 0·5 | |
| e | CORRECTED H | 263 | 264 | 263 | 263 | 263 | 264 | 263 | | |

*FIG.2.*

(DOUBLE SPEED FAST MOTION MODE)

| a | FIELD NUMBER | $F_1$ | $F_2$ | $F_3$ | $F_4$ | $F_5$ | $F_6$ | $F_7$ | $F_8$ | |
|---|---|---|---|---|---|---|---|---|---|---|
| b | SCANNING TRACK | $A_1$ | $A_2$ | $A_3$ | $A_4$ | $A_5$ | $A_6$ | $A_7$ | $A_8$ | |
| c | H NUMBER | 261·75 | 261·75 | 261·75 | 261·75 | 261·75 | 261·75 | 261·75 | 261·75 | |
| d | TIME OF DELAY (H) | 0 | 0·25 | 0·5 | 0·75 | 0 | 0·25 | 0·5 | 0·75 | |
| e | CORRECTED H | 262 | 262 | 262 | 261 | 262 | 262 | 262 | | |

FIG. 3.

(1/2 SLOW MOTION MODE)

| a | FIELD NUMBER | $F_1$ | $F_2$ | $F_3$ | $F_4$ | $F_5$ | $F_6$ | $F_7$ | $F_8$ | $F_9$ | |
|---|---|---|---|---|---|---|---|---|---|---|---|
| b | SCANNING TRACK | $A_1$ | $A_1$ | $A_1$ | $A_1$ | $A_2$ | $A_2$ | $A_2$ | $A_2$ | $A_3$ | |
| c | H NUMBER | 263·25 | 263·25 | 263·25 | 261·75 | 263·25 | 263·25 | 263·25 | 261·75 | 263·25 | |
| d | TIME OF DELAY (H) | 0·25 | 0 | 0·75 | 0·5 | 0·75 | 0·5 | 0·25 | 0 | 0·25 | |
| e | CORRECTED H | 263 | 264 | 263 | 262 | 263 | 263 | 263 | 262 | | |

FIG. 4.

| TAPE SPEED | H NUMBER IN A FIELD | CTL NUMBER IN A FIELD | THE CORRECTION |
|:---:|:---:|:---:|:---:|
| ⋮ | | | |
| − 6 | 267·75 | 3 | 2 |
| − 5 | | | |
| − 4 | 266·25 | 2 | 1 |
| − 3 | | | |
| − 2 | 264·75 | 1 | 2 |
| −1 | | | |
| 0 | 263·25 | 0 | 1 |
| 1 | | | |
| 2 | 261·75 | 1 | 2 |
| 3 | | | |
| 4 | 260·25 | 2 | 1 |
| 5 | | | |
| 6 | 258·75 | 3 | 2 |
| 7 | | | |
| 8 | 257·25 | 4 | 1 |
| ⋮ | | | |

FIG.5.

(TRIPLE SPEED FAST MOTION MODE)

| | | $F_1$ | $F_2$ | $F_3$ | $F_4$ | $F_5$ | |
|---|---|---|---|---|---|---|---|
| a | FIELD NUMBER | $F_1$ | $F_2$ | $F_3$ | $F_4$ | $F_5$ | |
| b | SCANNING TRACK | $A_1$ | $A_2$ | $A_4$ | $A_5$ | $A_7$ | |
| c | H NUMBER | 261·75 | 260·25 | 261·75 | 260·25 | 261·75 | |
| d | CTL NUMBER | 1 | 2 | 1 | 2 | 1 | |
| e | THE CORRECTION | 2 | 1 | 2 | 1 | 2 | |
| f | TIME OF DELAY (H) | 0 | 0·25 | 0 | 0·25 | 0 | |
| g | CORRECTED H | 262 | 260 | 262 | 260 | | |
| h | TIME OF DELAY (H) | 0·75 | 0 | 0·75 | 0 | 0·75 | |
| i | CORRECTED H | 261 | 261 | 261 | 261 | | |

FIG. 6.

4

FIG. 7.

(a)  HSW
(b)  P₁
(c)  CTL
(d)  P₂
(e)  S₁
(f)  TIME OF DELAY (H)   0  0·25  0  0·75  0  0·75  0·5  0·25  0·5  0·25  0

FIG. 9.

5

FIG. 8.

| a | FIELD NUMBER | $F_1$ | $F_2$ | $F_3$ | $F_4$ | $F_5$ | $F_6$ | $F_7$ | $F_8$ | |
|---|---|---|---|---|---|---|---|---|---|---|
| b | H NUMBER | 263·25 | 263·25 | 263·25 | 261·75 | 263·25 | 263·25 | 263·25 | 263·25 | |
| c | 4 KINDS: TIME OF DELAY (H) | 0·5 | 0·25 | 0 | 0·75 | 0 | 0·75 | 0·5 | 0·25 | |
| d | 4 KINDS: H NUMBER | 263 | 263 | 264 | 261 | 264 | 263 | 263 | | |
| e | 5 KINDS: TIME OF DELAY (H) | 0·5 | 0·25 | 0 | 0·75 | 1·0 | 0·75 | 0·5 | 0·25 | |
| f | 5 KINDS: H NUMBER | 263 | 263 | 264 | 262 | 263 | 263 | 263 | | |
| g | 9 KINDS: TIME OF DELAY (H) | 0·5 | 0·25 | 0 | 0·75 | 2·0 | 1·75 | 1·5 | 1·25 | |
| h | 9 KINDS: H NUMBER | 263 | 263 | 264 | 263 | 263 | 263 | 263 | | |

FIG.10.

0041868